# EUROPEAN PATENT APPLICATION

(11) **EP 1 895 674 A1**
(43) Date of publication of application: **05.03.2008**
(21) Application number: 06766836.8
(22) Date of filing: 16.06.2006
(51) Int. Cl.: H04B 3/54

(54) **POWER LINE COMMUNICATION SYSTEM AND POWER LINE COMMUNICATION METHOD**

(30) Priority: 16.06.2005 JP 2005176275; 18.04.2006 JP 2006114907
(71) Applicant: MITSUBISHI MATERIALS CORPORATION, Chiyoda-ku, Tokyo 100-8117 (JP)
(72) Inventor: YAMASHITA, Nobuyuki MITSUBISHI MAT. CORP., Chichibu-gun, Saitama 3688502 (JP); TARI, Kazuyoshi MITSUBISHI MAT. CORP., Chichibu-gun, Saitama 3688502 (JP); NAKAMURA, Kenzo MITSUBISHI MAT. CORP., Chichibu-gun, Saitama 3688502 (JP); YOKOSHIMA, Takao MITSUBISHI MAT. CORP., Chichibu-gun, Saitama 3688502 (JP); HASHIMOTO, Hisashi MITSUBISHI CABLE IND. LTD., Nerima-ku, Tokyo 1768516 (JP); MIYAKE, Kazuyuki MITSUBISHI CABLE IND. LTD., Nerima-ku, Tokyo 1768516 (JP)
(74) Representative: HOFFMANN EITLE
(86) International application number: PCT/JP2006/312148
(87) International publication number: WO 2006/135055

(57) **Abstract**

The power line communications system of the present invention comprises a power line L that has a plurality of branch lines LB1 to LBn branched at a branch point; communications devices T1 to Tn that are connected to the branch lines LB1 to LBn and perform sending and receiving of data via the branch lines LB1 to LBn; and a relay device 1 that is disposed at the branch point and relays sending of the data. It is also provided with a branching device Y that consists of a plurality of couplers K1 to Kn that couple the relay device 1 and the plurality of branch lines LB1 to LBn and have different resonance frequencies for each of the respective branch lines LB1 to LBn, with the relay device 1 performing sending of data by changing the communication frequency to the resonance frequency of the branch lines LB1 to LBn through which the data are sent.

## Description

### TECHNICAL FIELD

The present invention relates to a power line communications system that performs data communication via power lines and a power line communications method.
Priority is claimed on Japanese Patent Application No. 2005-176275, filed June 16, 2005, and Japanese Patent Application No. 2006-114907, filed April 18, 2006, the content of which is incorporated herein by reference.

### BACKGROUND ART

In recent years, performing data communication between electronic instruments via power lines wired within buildings such as houses and the like as well as vehicles has been studied. For example, favorably performing communication of data such as audio signals and video signals between onboard instruments that are preinstalled in a vehicle and onboard instruments that are retrofitted in a vehicle using the power lines in a vehicle has been researched.

Onboard instruments that are preinstalled in a vehicle include car audio devices and car navigation systems and the like. Also, onboard instruments that are retrofitted in a vehicle include Electronic Toll Collection (ETC) onboard instruments and rear-view cameras and the like. The aforementioned power lines are those that supply electrical power to various onboard instruments from a power supply such as a battery that the vehicle is supplied with. Onboard instruments that are preinstalled in a vehicle are directly connected, while onboard instruments that are retrofitted are connected via a cigar socket or the like.

As power line communication technology, Patent Document 1 proposes a vehicle power line communications system that performs communication between onboard instruments via power lines. Note that in this vehicle power line communications system, a relay device that performs wireless communication with retrofitted devices is described.
Patent Document 1: Japanese Patent No. 3589218 (Claims, FIG 1)

### DISCLOSURE OF INVENTION

### PROBLEM TO BE SOLVED BY THE INVENTION

In the aforesaid conventional art, the following issues remain.

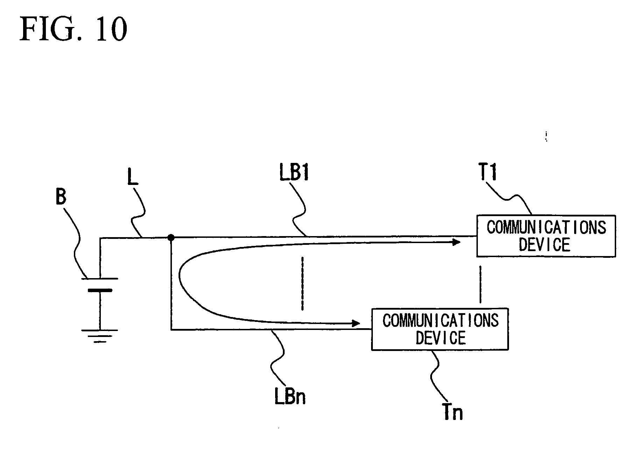

That is, in a conventional power line communications system for vehicles and the like, as shown in FIG 10, a power line L that is connected to a battery B and has a plurality of branch lines LB 1 to LBn that are branched at a branch point is provided, and communications devices T1 to Tn of the onboard instruments are connected to the branch lines LB1 to LBn respectively. However, since the transmission power is small with respect to the long communication distance between the communications devices T1 to Tn, sufficient communication quality sometimes cannot be obtained. In particular, when the transmission power is small, the S/N ratio is low, and so the data transmission capacity is small, which leads to difficulties when using high-quality applications.

Conversely, when the transmission power is large, since the impedance characteristics of the added onboard instrument change, the leakage electric field increases, which may exert an impact on other systems.

Moreover, since a plurality of onboard instruments simultaneously use a restricted frequency band, there is the problem of the utilization efficiency deteriorating. Note that due to connecting a plurality of onboard instruments to a power line, there is the inconvenience of a complexity of joint connections. Also, as in the Patent Document 1, in the case of adding a relay device wirelessly, inconveniences arise such as a wireless communications device also being required for the communications device side, and communication becoming difficult at places where the wireless signal does not reach due to the presence of many obstacles.

The present invention was achieved in view of the above obstacles, and has as its object to provide a power line communications system and a power line communication method that can perform favorable communication even with small transmission power, and can improve the utilization efficiency.

### MEANS FOR SOLVING THE PROBLEM

The present invention adopts the following constitution in order to solve the above-mentioned problems. That is, the power line communications system of the present invention is provided with a power line that has a plurality of branch lines branched at a branch point; communications devices that are connected to the branch lines and perform sending and receiving of data via the branch lines; and a relay device that is disposed at the branch point and relays sending of the data.

Also, the power line communications method in accordance with the present invention is a power line communication method that performs communication between a plurality of communications devices via a power line that has a plurality of branch lines branched at a branch point, consisting of the steps of: sending data via the branch lines from one of the communications devices to another of the communications devices; sending the data to the other communications device via the branch lines by relaying the data from the one communications device by a relay device that is provided at the branch point; and the other communications device receiving the data via the branch lines.

Since a relay device is provided at the branch point of the power line in this power line communications system and power line communications method, it is possible to achieve a constitution with the shortest communication distance to each communications device that is connected to each branch line, it is possible to perform high-quality communication with a small transmission power, and it is possible to minimize the leakage electric field. Also, it is possible to increase the S/N ratio, and so high-speed transmission becomes possible. Also, it is possible to ensure favorable communication quality with only power lines at places where wireless communication is not possible.

The power lines are arranged in a vehicle having a plurality of onboard instruments, and the communications device may be provided in the onboard instruments. In this case, in the power line communications system, since communication is performed between onboard instruments via power lines in which power is supplied from the battery of the vehicle, and the relay device is provided at the branch point such as a switchboard in the vehicle, it is possible to obtain favorable communication quality between the onboard instruments in the vehicle.

The power line communications system of the present invention may be further provided with a connector portion that is provided at a terminal portion of the branch lines and detachably connects the communications device. In this case, since the connector portion is installed at a plurality of locations in the vehicle in this power line communications system, for example, in the case of wanting to install a speaker as a communications device at a plurality of locations and discretionary positions in the vehicle, by connecting the speaker to the connector portion of the position closest to the installation location, it is possible to achieve a layout-free and diversified speaker layout. Also, it is possible to optionally alter the arrangement of speakers and add speakers in accordance with the seat arrangement and the like of the vehicle. Moreover, by connecting a vehicle exterior speaker to a connector portion near a door or the like, it is possible to perform music playback outside of the vehicle in outdoor circumstances and the like.

The branch point may be disposed in an electrical junction box that branches and joins the plurality of branch wires. In this case, since the branch point is disposed in the electrical junction box in this power line communications system, branch wiring of a power line is facilitated, and so it is possible to improve the workability and maintenance characteristics.

The relay device may be any one of a repeater, a bridge, or a router. In this case, in the case of the same LAN being connected in this power line communications system, a repeater is used for the relay device, and so a signal is amplified with this relay device as well as distortion in the signal is corrected before being looped back. Also, in the case of individual LANs being connected to each other, a bridge is used for the relay device, the communications device port is selected from the sending source and sending destination addresses, and a dataframe is sent. Also, in the case of a power line being connected to an external network such as the Internet and a plurality of LANs being connected, a router is used for the relay device, and the external network port and the communications device port are selected from the sending source and sending destination addresses, and a dataframe is sent.

Also, the power line communications system of the present invention is further provided with a branching device that consists of a plurality of couplers that couple the relay device and the plurality of branch lines and have different resonance frequencies for the respective branch lines, with the relay device performing sending of the data by changing the communication frequency to the resonance frequency of the branch line through which the data are sent. In this case, this power line communications system is provided with the branching device in which the couplers that have different resonance frequencies for the respective branch lines have an array structure, and since the frequency is changed by the relay device to a communication frequency that corresponds to the resonance frequency of the branch line through which the data are transmitted, each branch line is made independent with the communication frequency, and so it is possible to improve utilization efficiency of the frequency band.

Also, the power line communications system of the present invention may be further provided with a high impedance fuse that is provided at the branching device and in which the impedance characteristic becomes a maximum in the communication frequency band of the branch line that is connected. In this case, since the branch point of the power line is near the battery and in a low impedance state, in the case of difficulty in passing a transmission signal due to impedance matching, in this power line communications system, since a fuse in which maximum impedance is obtained at the communication frequency band is connected to each branch line in the branching device, impedance matching is performed by making a high impedance at the branch point in the communication frequency band that is used in the branch line, and so passage of the desired signal can be facilitated to the relay device.

The fuse may have a fuse element that fuses when an overcurrent flows, a support terminal portion that supports both ends of the fuse element, and a ferrite bead that is provided in the support terminal portion. In this case, since the fuse element (fuse wire) of the fuse is supported by the support terminal portion in which a ferrite bead is provided, it is possible to set the impedance characteristic to become a maximum at the coupling resonance frequency by the ferrite bead, and better quality communication becomes possible by high frequency noise being cut by the high frequency loss characteristic that is possessed by the ferrite bead.

### EFFECT OF THE INVENTION

The present invention exhibits the following effects.

Specifically, since the power line communications system and the power line communication method in accordance with the present invention are provided with a relay device at the branch point of the branch lines, it is possible to achieve a constitution with the shortest communication distance between devices, and it is possible to perform high quality communication even with a small transmission power. Thereby, it is possible to minimize the leakage electric field and reduce interference waves. Moreover, improving communication quality enables high-speed transmission, and enables application to high-speed applications of high quality.

### BRIEF DESCRIPTION OF THE DRAWINGS

FIG 1 is a block diagram that shows the circuit configuration of the branch device and the entire system in the power line communications system of the first embodiment in accordance with the present invention.
FIG 2 is a perspective view that transparently shows the inside of the fuse of the first embodiment.
FIG 3 is a plan view that shows the substrate of the branch device of the first embodiment.
FIG 4 is a perspective view that shows the branch device and the relay device of the first embodiment.
FIG 5 is a simplified block diagram that shows the power line communications system of the first embodiment.
FIG 6 is a block diagram that shows the circuit configuration of the branch device and the entire system in the power line communications system of the second embodiment.
FIG 7 is a block diagram that shows the circuit configuration of the branch device and the entire system in the power line communications system of the third embodiment.
FIG 8 is an outline upper view showing the in-vehicle arrangement of each constitution in the power line communications system of the first embodiment applied to the vehicle.
FIG 9 is an outline side view showing the arrangement of each constitution in the same vehicle.
FIG 10 is a schematic block diagram showing an example of a conventional power line communications system in accordance with the present invention.

### EXPLANATION OF REFERENCE NUMERALS

1, 21, 31 relay device
2 fuse
2a fuse element
2b support terminal portion
2c ferrite bead
C vehicle
JB electrical junction box
K1 to Kn couplers
L power line
LB, LB 1 to LBn branch lines
M1 to Mn onboard instruments
CS cigar socket (connector portion)
T1 to Tn communications device
Y branching device

### BEST MODE FOR CARRYING OUT THE INVENTION

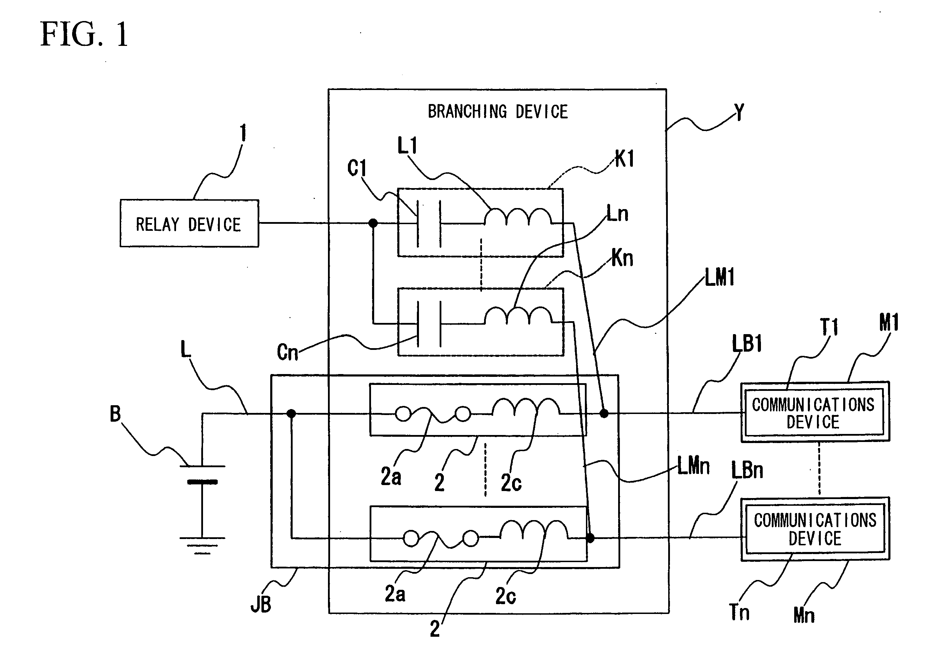

Hereinbelow, a first embodiment of the power line communications system and the power line communication method in accordance with the present invention shall be described with reference to FIG 1 to FIG 5.

The power line communications system in accordance with the present embodiment is, as shown in FIG 1, provided with a power line L that is wired in a vehicle, supplies electrical power to onboard instruments M1 to Mn of a vehicle from a battery B that is a power source, and is branched into a plurality of branch lines LB 1 to LBn by an electrical junction box JB that is a branch point; communications devices T1 to Tn that are mounted in the onboard instruments M1 to Mn and perform sending and receiving of data by being connected to the branch lines LB1 to LBn of the power line L; a relay device 1 that is provided in the electrical junction box JB of the branch point and relays the sending of data; and a branching device Y that consists of a plurality of couplers K1 to Kn that couple the relay device 1 and the branch lines LB1 to LBn and have different resonance frequencies for each of the respective branch lines LB1 to LBn.

The electrical junction box JB is a so-called junction block, joint box, junction box, and the like, and is installed at a connection location where the harness of the entire vehicle is divided into the instrument panel, body and engine room, and the like, and in the present embodiment is placed at a location near the instrument panel that facilitates maintenance.

The branching device Y is provided, in the electrical junction box JB, with a high impedance fuse 2 that is connected to each of the branch lines LB 1 to LBn and in which the impedance characteristic is a maximum at the communication frequency band of each branch line LB1 to LBn; and a relay (not illustrated).

The couplers K1 to Kn are provided with a plurality of relay lines LM1 to LMn that connect the branch lines LB1 to LBn and the relay device 1, and capacitors C1 to Cn and inductors L1 to Ln that are connected in series with the respective relay lines LM1 to LMn and have different resonance frequencies for each of the respective branch lines LB1 to LBn. That is, the respective branch lines LB1 to LBn are set to mutually differing resonance frequencies fc1 to fcn by each respective coupler K1 to Kn.

The relay device 1 is a repeater, amplifies the signal of data that is sent and corrects distortion, and also has a processing circuit that performs loopback of data by changing the communication frequency to the resonance frequency fc1 to fcn of the respective branch lines LB 1 to LBn through which data are sent.

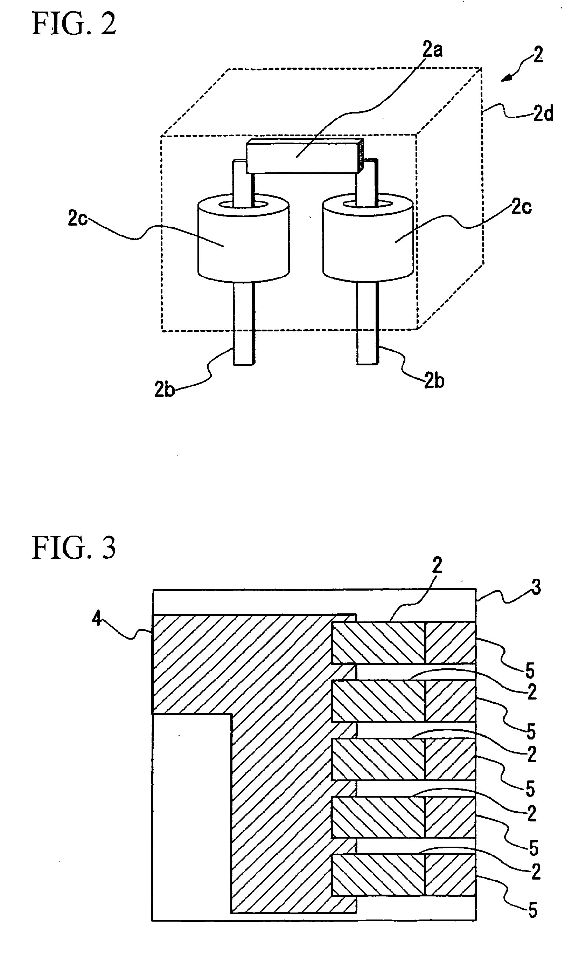

The fuse 2, as shown in FIG 1 and FIG. 2, is provided with a fuse element 2a that fuses when an overload current is flowed, a pair of support terminal portions 2b that support both ends of the fuse element 2a with one end, with the other end serving as a terminal; ferrite beads 2c that are fixed to each support terminal portion 2b; and a case 2d that houses them. The ferrite beads 2c are formed in a cylindrical shape with ferrite, and are fixed to the support terminal portions 2b in the state of the support terminal portions 2b being passed therethrough. Note that an equivalent circuit of the fuse 2 is as shown in FIG 1 constituted by the fuse element 2a and the ferrite bead 2c, which serves as an inductor, being connected in series. The impedance characteristic of this fuse 2 is set with the ferrite bead 2c so as to become a maximum at the coupling resonance frequency of each of the respective branch lines LB1 to LBn that are connected.

Also, each fuse 2, as shown in FIG 3, is mounted on a substrate 3 in the branching device Y. That is, a wiring pattern 4 with one end connected to the power line L of the battery B side, and a plurality of branch line terminals 5 with one end connected to each of the branch lines LB1 to LBn are formed in a pattern shape with foil or the like on the substrate 3, and each fuse 2 is provided so as to be suspended between the other end of the wiring pattern 4 and the other end of each of the branch line terminals 5.

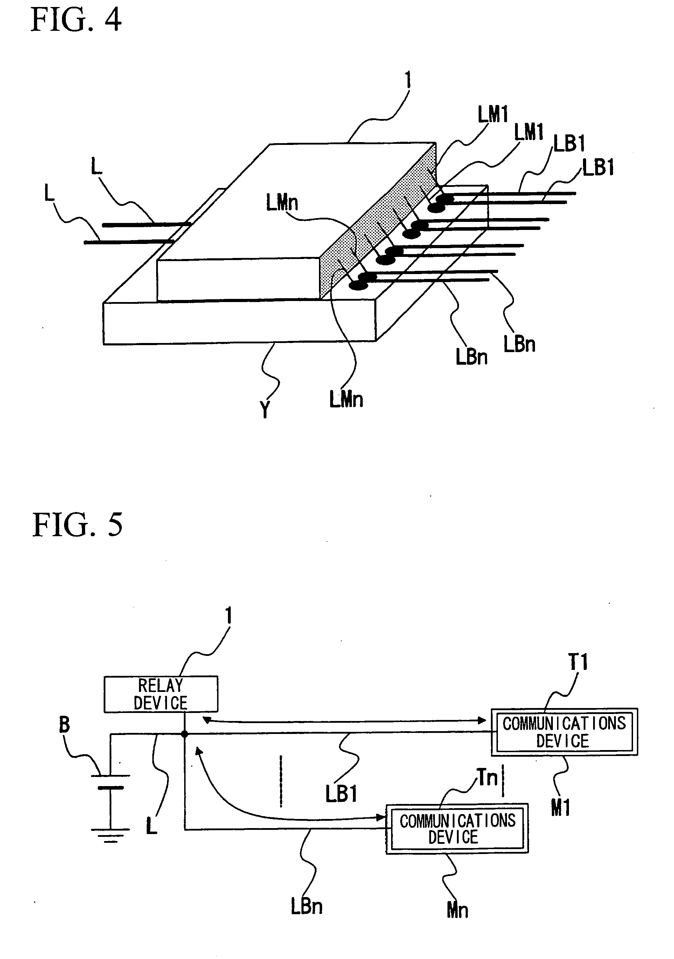

Note that the branching device Y is provided with a connector structure for branch lines LB 1 to LBn that enables easy extraction and insertion of each of the branch lines LB1 to LBn. Also, as shown in FIG. 4, the relay device 1 is fixed on the branching device Y.

Note that the onboard instruments M1 to Mn may be instruments that are preinstalled in the vehicle or instruments that are retrofitted to the power line L via a cigar socket or the like. For example, onboard instruments M1 to Mn that are preinstalled in a vehicle include car audio devices, car navigation systems, and the like. Also, onboard instruments M1 to Mn that are retrofitted in a vehicle include Electronic Toll Collection (ETC) onboard units, rear-view cameras, and the like.

Next, the power line communication method in the power line communications system of the present embodiment shall be described.

In the present embodiment, the case shall be described of sending a video signal or an audio signal as data from the onboard instrument M1 to another onboard instrument Mn in a vehicle.

First, the data of a video signal or the like is sent by overlapping a high frequency signal on the branch line LB1 of the power line L from the communications device T1 (one communications device) of the onboard instrument M1. At this time, the data that is to be sent is modulated by a predetermined modulation method.

Next, the relay device 1 receives the signal of the data that is transmitted via the branch line LB1 in the electrical junction box JB of the branch point, amplifies the signal and corrects the distortion, and loops back the data via the coupler Kn of the branching device Y to the communications device Tn (another communications device) of the onboard instrument Mn that is connected to another branch line LBn. At this time, in the coupler K1, the resonance frequency of the branch line LB1 is set by the capacitor C1 and the inductor L1 to fc1, and the communication frequency from the communications device T1 is set to the resonance frequency fc1.

On the other hand, in the coupler Kn, the resonance frequency fcn of the branch line LBn is set by the capacitor Cn and the inductor Ln to a value that differs from the resonance frequency fc1. For this reason, the relay device 1 receives the data from the one communications device T1 via the branch line LB1 at the same communications frequency as the resonance frequency fc1, and when looping back the data to the other communications device Tn, the data are sent by changing the communications frequency band to the resonance frequency fcn of the branch line LBn.

Then, the communications device Tn of the other onboard instrument Mn receives the data that is sent through the branch line LBn and based on the video signal that is restored from the received data by the decoding circuit (not illustrated), displays the image on the screen of the onboard instrument Mn.

In the present embodiment, since the relay device 1 is provided in the electrical junction box JB that is the branch point of the power line L, as shown in FIG 5, it is possible to achieve a constitution with the shortest communication distance to each communications device T1 to Tn that is connected to each branch line LB1 to LBn, it is possible to perform high-quality communication with a small transmission power, and it is possible to minimize the leakage electric field. Also, it is possible to increase the S/N ratio, and so enable high-speed transmission.

Moreover, the present embodiment is provided with the branching device Y in which the couplers K1 to Kn of the differing resonance frequencies fc1 to fen for each branch line LB1 to LBn have an array structure, and since the frequency is changed by the relay device 1 to a communication frequency that corresponds to the resonance frequency fc1 to fcn of the branch lines LB1 to LBn through which the data are transmitted, each branch line LB 1 to LBn is made independent by the communication frequency, and so it is possible to improve utilization efficiency of the frequency band.

Also, since the electrical junction box JB, which is the branch point of the power line L, is near the battery B and in a low-impedance state, there are times when passing the transmission signal is difficult due to impedance matching. However, in the power line communications system of the present embodiment, since the fuse 2 in which a maximum impedance is obtained in the communication frequency band is connected to each of the branch lines LB1 to LBn in the branching device Y, impedance matching is performed by making a high impedance in the communication frequency band used in the branch lines LB1 to LBn at the branch point, and so it becomes easy to pass the desired signal to the relay device 1.

Moreover, since the fuse element 2a is supported by the support terminal portion 2b in which a ferrite bead 2c is provided, it is possible to set the impedance characteristic to become a maximum at the coupling resonance frequency by the ferrite bead 2c, and better quality communication becomes possible by high frequency noise being cut by the high frequency loss characteristic that is possessed by the ferrite bead 2c.

Also, since the branch point of the power line L is arranged in the power junction box JB, the branch wiring of the power line L becomes easy, and so it is possible to improve workability and maintainability. That is, by dividing the harness in the power junction box JB and absorbing the branches therein, it is possible to improve productivity and workability, and by collecting the fuse 2 and the relay in one location, it is possible to improve the maintainability. Note that by concentrating the fuse 2 and the relay in the electrical junction box JB, the length of the large current line (between the battery B and the electrical junction box JB) is shortened, and so it is possible to achieve a reduction in voltage drop.

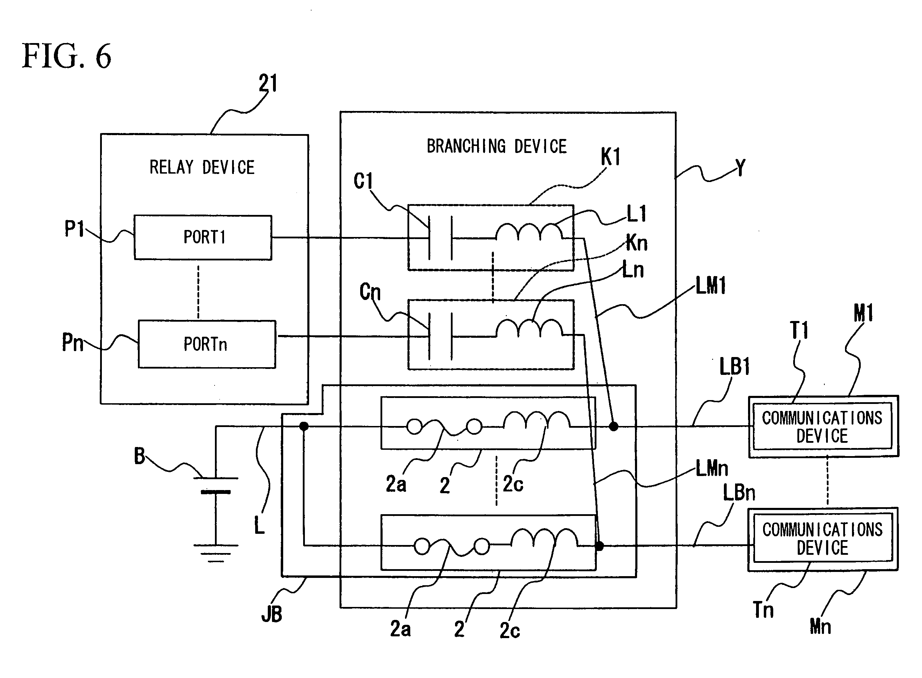

Next, the second and third embodiments of the power line communications system and the power line communication method in accordance with the present invention shall be described with reference to FIG 6 to FIG 7.

The point of difference between the second embodiment and the first embodiment is that, while the relay device 1 of the first embodiment is a repeater, in the power line communications system of the second embodiment, as shown in FIG. 6, the relay device 21 is a bridge provided with ports P1 to Pn for respective communications devices T1 to Tn connected to each bridge line LB1 to LBn.

That is, in the second embodiment, in the case of individual LANs being connected via a power line L, with the relay device 21 being a bridge, the ports P1 to Pn of the communications devices T1 to Tn that are connected are selected from the sending source and sending destination addresses, and a dataframe is sent.

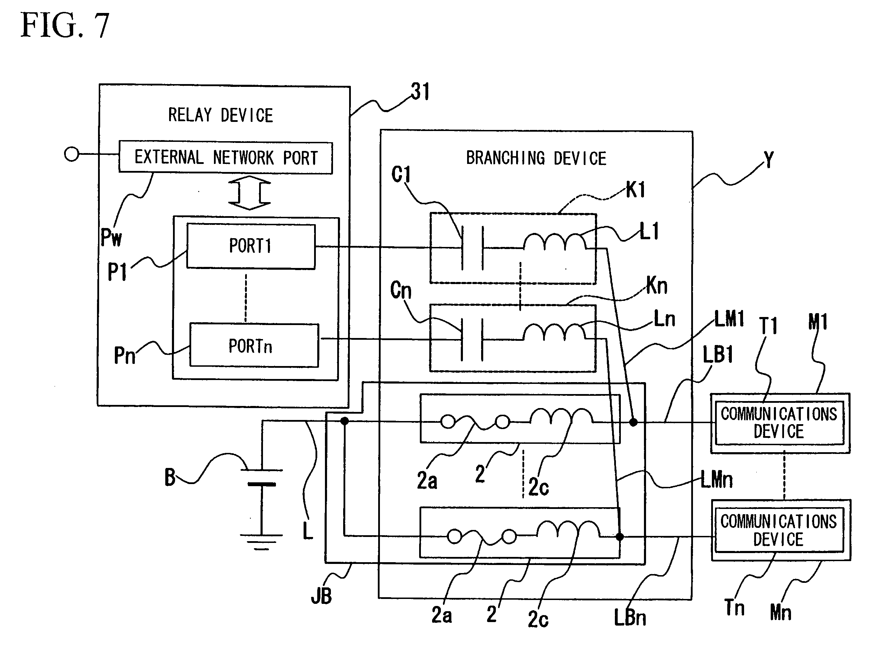

The point of difference between the third embodiment and the second embodiment is that, while the relay device 1 of the second embodiment is a bridge, in the power line communications system of the third embodiment, as shown in FIG. 7, the relay device 31 is a router provided with a port Pw of an external network such as the Internet and ports P1 to Pn of respective communications devices T1 to Tn.

That is, in the third embodiment, in the case of the power line L being connected to an external network such as the Internet and a plurality of LANs being connected, with the relay device 31 being a router, the port Pw of the external network and the ports P1 to Pn of the communications devices T1 to Tn are selected from the sending source and sending destination addresses, and a dataframe is sent.

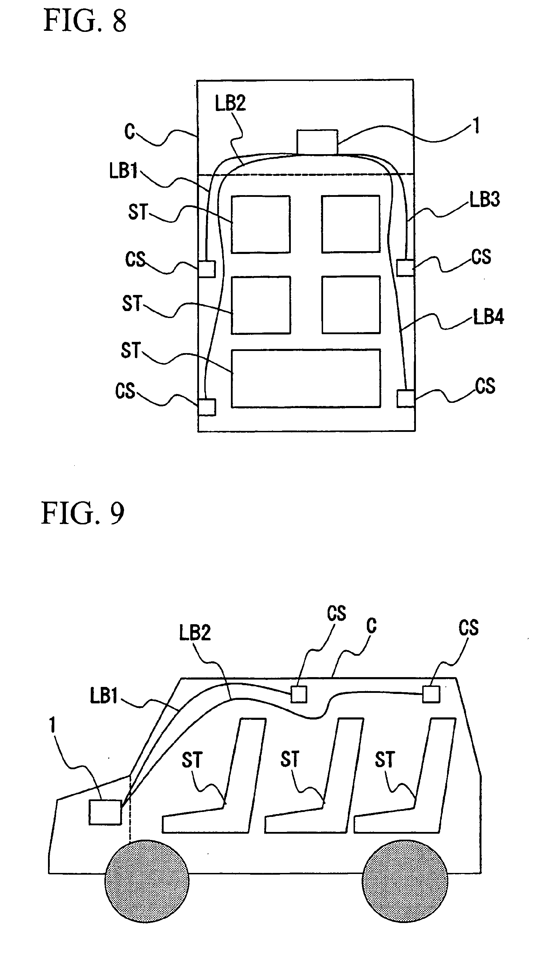

Next, the case of applying the first embodiment of the power line communications system and the power line communication method in accordance with the present invention to a vehicle shall be described with reference to FIG. 8 and FIG. 9.

In this power line communications system, as shown in FIG. 8 and FIG 9, a cigar socket (connector portion) CS that detachably connects a communications device such as a speaker and the like is provided at the terminal portion of the branch lines LB1 to LB4, and this cigar socket CS is installed at a plurality of locations in the vehicle C. In this example, the cigar socket CS is applied to a vehicle C with three rows of seats, and the relay device 1 is installed under the hood of the vehicle C, with the branch lines LB1 to LB4 that are connected to the relay device 1 being wired inside the vehicle C. Then, each terminal portion of the branch lines LB1 to LB4 is wired until the ceiling portion of the vehicle C near the second and third row seats ST, and the cigar socket CS is installed to each of the terminal portions of the branch lines. That is, the cigar socket CS is evenly arranged in the vehicle cabin.

In this way, in this power line communications system, since the cigar socket CS is installed at a plurality of locations in the vehicle C, in the case of wanting to install a speaker as a communications device in the vehicle C at a plurality of locations and discretionary positions in the vehicle, by connecting the speaker to the cigar socket CS at the place that is closest to the installation location, it is possible to achieve a layout-free and diversified speaker layout. Also, it is possible to optionally alter the arrangement of speakers and add speakers in accordance with the seat arrangement and the like of the vehicle C. Moreover, by connecting a vehicle exterior speaker to a cigar socket CS near a door or the like, it is possible to perform music playback outside of the vehicle in outdoor circumstances and the like.

Note that the technical scope of the present invention is not restricted to the aforesaid embodiments, and modifications can be made without departing from the spirit or scope of the present invention.

For example, the present invention as described above was suitably applied to power line communication in a vehicle, but may also be applied to power line communication in a building or the like such as a typical house.

### INDUSTRIAL APPLICABILITY

In the power line communications system and power line communication method of the present invention, since a relay device is provided at a branch point of power lines, it is possible to achieve a constitution with the shortest communication distance to each communications device that is connected to each branch line, it is possible to perform high-quality communication with a small transmission power, and it is possible to minimize the leakage electric field. Also, it is possible to increase the S/N ratio, and so high-speed transmission becomes possible. Also, it is possible to ensure favorable communication quality with only power lines at places where wireless communication is not possible.

## Claims

1. A power line communications system comprising:
a power line that has a plurality of branch lines branched at a branch point;
communications devices that are connected to the branch lines and perform sending and receiving of data via the branch lines; and
a relay device that is disposed at the branch point and relays sending of the data.

2. The power line communications system in accordance with claim 1, wherein
the power line is wired in a vehicle that has a plurality of onboard instruments; and
the communications devices are provided in the onboard instruments.

3. The power line communications system in accordance with claim 2, wherein
a connector portion that detachably connects the communications device is provided at a terminal portion of each branch line; and
the connector portion is installed at a plurality of locations in the vehicle.

4. The power line communications system in accordance with claim 1, wherein
the branch point is disposed in an electrical junction box that branches and joins the plurality of branch wires.

5. The power line communications system in accordance with claim 1, wherein the relay device is any one of a repeater, a bridge, and a router.

6. The power line communications system in accordance with claim 1, further comprising:
a branching device that consists of a plurality of couplers that couple the relay device and the plurality of branch lines and have different resonance frequencies for the respective branch lines;
wherein the relay device performs sending of the data by changing the communication frequency to the resonance frequency of the branch line through which the data are sent.

7. The power line communications system in accordance with claim 6, further comprising:
a high impedance fuse that is provided at the branching device and in which the impedance characteristic becomes a maximum in the communication frequency band of the branch line that is connected.

8. The power line communications system in accordance with claim 7, wherein the fuse has:
a fuse element that fuses when an overcurrent flows;
a support terminal portion that supports both ends of the fuse element; and
a ferrite bead that is provided in the support terminal portion.

9. A power line communications method that performs communication between a plurality of communications devices via a power line that has a plurality of branch lines branched at a branch point, consisting of the steps of:
sending data via the branch lines from one of the communications devices to another of the communications devices;
sending the data to the other communications device via the branch lines by relaying the data from the one communications device by a relay device that is provided at the branch point; and
the other communications device receiving the data via the branch lines.
